(19) Europäisches Patentamt
European Patent Office
Office européen des brevets

(11) **EP 1 748 280 A2**

(12) **EUROPEAN PATENT APPLICATION**

(43) Date of publication:
**31.01.2007 Bulletin 2007/05**

(21) Application number: **06253767.5**

(22) Date of filing: **19.07.2006**

(51) Int Cl.:
***G01C 19/56*** *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.07.2005 JP 2005219253**

(71) Applicants:
- **Fujitsu Media Devices Limited**
  **Yokohama-shi,**
  **Kanagawa 222-0033 (JP)**
- **FUJITSU LIMITED**
  **Kawasaki-shi,**
  **Kanagawa 211-8588 (JP)**

(72) Inventors:
- **Ishikawa, Hiroshi,**
  **c/o Fujitsu Limited**
  **Kawasaki-shi**
  **Kanagawa 211-8588 (JP)**
- **Sano, Satoshi,**
  **c/o Fujitsu Limited**
  **Kawasaki-shi**
  **Kanagawa 211-8588 (JP)**
- **Katsuki, Takashi,**
  **c/o Fujitsu Limited**
  **Kawasaki-shi**
  **Kanagawa 211-8588 (JP)**
- **Takahashi, Yuji,**
  **c/o Fujitsu Limited**
  **Kawasaki-shi**
  **Kanagawa 211-8588 (JP)**
- **Nakazawa, Fumihiko,**
  **c/o Fujitsu Limited**
  **Kawasaki-shi**
  **Kanagawa 211-8588 (JP)**
- **Yamaji, Takayuki,**
  **c/o Fujitsu Media Devices Ltd.**
  **Yokohama-shi**
  **Kanagawa 222-0033 (JP)**

(74) Representative: **Hitching, Peter Matthew**
**HASELTINE LAKE**
**Imperial House**
**15-19 Kingsway**
**London WC2B 6UD (GB)**

(54) **Angular velocity sensor**

(57) An angular velocity sensor includes a first gimbal portion (10), a second gimbal portion (20) connected to the first gimbal portion by first torsion bars (12) provided at opposing sides of the first gimbal portion, a frame portion (30) connected to the second gimbal portion (20) by second torsion bars (22) provided at the opposing sides of the second gimbal portion, first electrostatic coupling portions (14) provided at the opposing sides of the first gimbal portion to electrostatically couple the first gimbal portion and the second gimbal portion, and second electrostatic coupling portions (24) provided at the opposing sides of the second gimbal portion to electrostatically couple the second gimbal portion and the frame portion. In the first gimbal portion (10), a maximum width of sides of a direction of the first torsion bars is greater than that of the sides where the first torsion bars are provided.

FIG.3

**Description**

BACKGROUND OF THE INVENTION

1. Field of the Invention

This invention generally relates to angular velocity sensors, and more particularly, to an angular velocity sensor of a double-gimbal structure.

2. Description of the Related Art

An angular velocity sensor detects the angular velocity applied to an object, and is employed for detection of camera shake, car navigation, detection of a roll angle for a release timing of side air bags, attitude control of vehicle or robot, or the like. There has been proposed a vibration type of angular velocity senor having a double-gimbal structure by use of Coriolis force, as disclosed in Japanese Patent Application Publication No. 7-3337 (hereinafter, referred to as conventional technique).

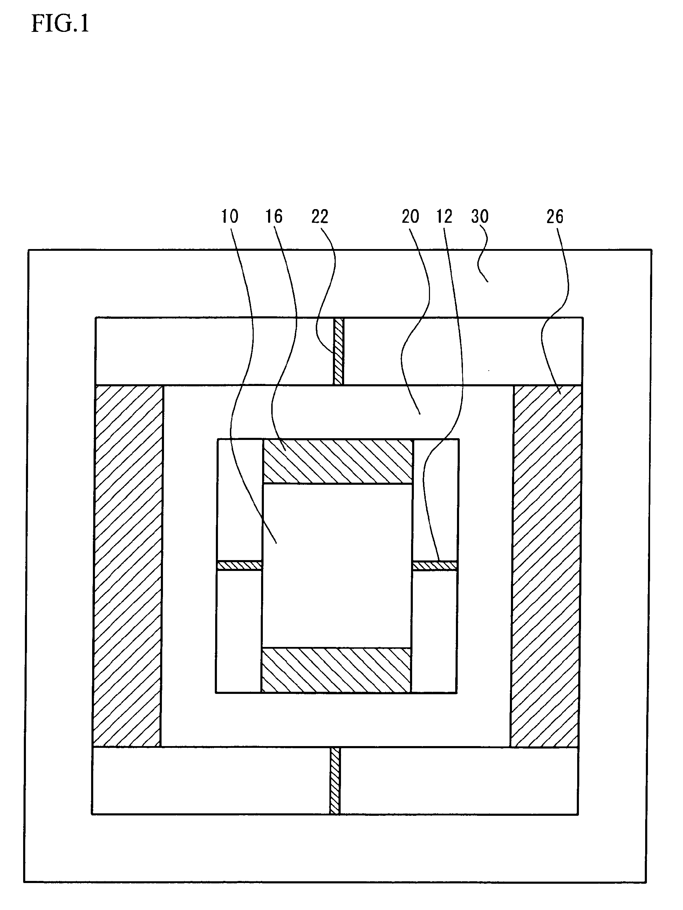

FIG. 1 is a top view of an angular velocity sensor of the above-described conventional technique. Referring to FIG. 1, a first gimbal portion 10 having a square shape is mechanically connected, at a pair of opposing sides, to a second gimbal portion 20 by first torsion bars 12. There are also provided a pair of parallel plane plate electrodes 16 at the other pair of opposing sides. One parallel plane plate electrode 16 is fixed to the first gimbal portion 10, and the other is fixed to the second gimbal portion 20. The second gimbal portion 20 is mechanically connected to a pair of opposing sides of a frame portion 30 by second torsion bars 22. There are also provided a pair of parallel plane plate electrodes 26 at the other pair of opposing outsides. One of the pair of the parallel plane plate electrodes 26 is fixed to the second gimbal portion 20, and the other is fixed to the frame portion 30. As stated heretofore, the torsion bars hold the gimbal portions.

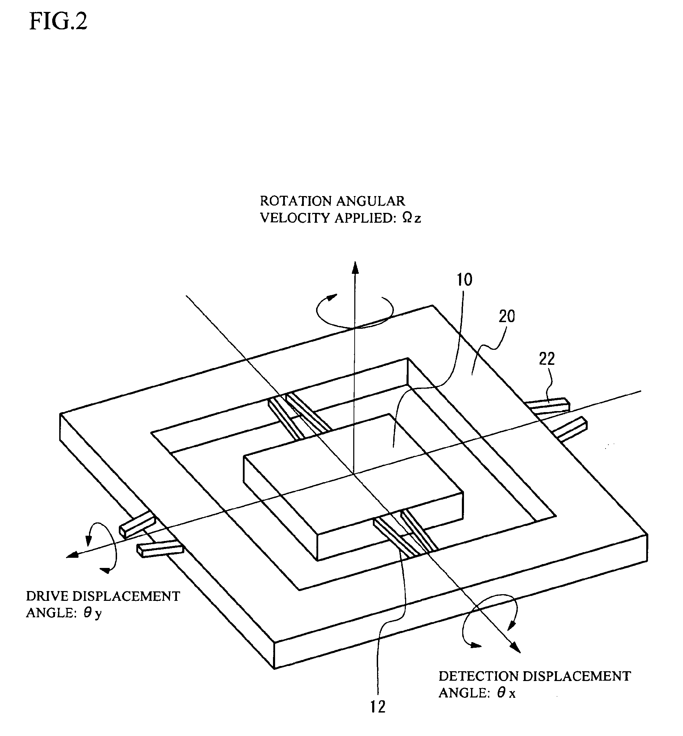

Referring now to FIG. 2, a description is given of the principle of operation of the above-described angular velocity sensor. FIG. 2 shows only the first gimbal portion 10, the second gimbal portion 20, the first torsion bars 12, and the second torsion bars 22. It is configured such that x-axis is set to a direction of the first torsion bar 12, y-axis is set to the direction of the second torsion bars 22, and z-axis is set to the direction vertical to the gimbal structure. There are provided two torsion bars in FIG. 2, whereas there is provided one torsion bar in FIG. 1. The first gimbal portion 10 and the second gimbal portion 20 are made swing (vibrate) around the y-axis, by applying voltages alternately to the parallel plane plate electrodes 26. At this point, the second gimbal portion 20 is referred to as a drive gimbal portion. $\theta y$ represents a drive displacement angle. In this state, when a rotational angular velocity $\Omega z$ is applied around the z-axis, Coriolis force is generated in a direction perpendicular to the $\gamma$-axis, causing the second gimbal portion 20 to swing around the x-axis, which runs at right angles to the y-axis. However, since the second gimbal portion 20 cannot swing, only the first gimbal portion 10 swings around the x-axis. At this point, the first gimbal portion 10 is referred to as a detection gimbal portion. Then, a detection displacement angle $\theta x$ is detected by a potential change of the parallel plane plate electrodes 16. In this manner, the angular velocity is detected. In the angular velocity sensor, there is a demand for improving the detection sensitivity of the angular velocity.

SUMMARY OF THE INVENTION

The present invention has been made in view of the above circumstances and provides an angular velocity sensor that can improve the detection sensitivity.

According to one aspect of the present invention, there is provided an angular velocity sensor including: a first gimbal portion; a second gimbal portion in connection with the first gimbal portion by first torsion bars provided at opposing sides of the first gimbal portion; a frame portion in connection with the second gimbal portion by second torsion bars provided at the opposing sides of the second gimbal portion; first electrostatic coupling portions provided at the opposing sides of the first gimbal portion to electrostatically couple the first gimbal portion and the second gimbal portion; and second electrostatic coupling portions provided at the opposing sides of the second gimbal portion to electrostatically couple the second gimbal portion and the frame portion. In the first gimbal portion, a maximum width of sides of a direction of the first torsion bars is greater than that of the sides where the first torsion bars are provided. The mass of the first gimbal portion is increased, thereby improving the detection sensitivity of the angular velocity.

According to another aspect of the present invention, there is provided an angular velocity sensor including: a first gimbal portion; a second gimbal portion in connection with the first gimbal portion by first torsion bars provided at opposing sides of the first gimbal portion; a frame portion in connection with the second gimbal portion by second torsion bars provided at the opposing sides of the second gimbal portion; first electrostatic coupling portions provided at the opposing sides of the first gimbal portion to electrostatically couple the first gimbal portion and the second gimbal portion;

and second electrostatic coupling portions provided at the opposing sides of the second gimbal portion to electrostatically couple the second gimbal portion and the frame portion. In the second gimbal portion, a maximum width of sides of a direction of the second torsion bars is greater than that of the sides where the second torsion bars are provided. The mass of the second gimbal portion is increased, thereby improving the detection sensitivity of the angular velocity.

BRIEF DESCRIPTION OF THE DRAWINGS

Preferred embodiments of the present invention will be described in detail with reference to the following drawings, wherein:

FIG. 1 is a top view of an angular velocity sensor of a conventional technique;
FIG. 2 illustrates the principle of operation of the angular velocity sensor having a double-gimbal structure;
FIG. 3 is a top view of an angular velocity sensor in accordance with a first embodiment of the present invention;
FIG. 4 is a top view of the angular velocity sensor in accordance with a second embodiment of the present invention;
FIG. 5 is a top view of the angular velocity sensor in accordance with a third embodiment of the present invention;
FIG. 6A through FIG. 6C are views illustrating the principle of the drive and detection of parallel plane plate electrodes and comb-teeth electrodes;
FIG. 7A and FIG. 7B show schematic cross-sectional views of the angular velocity sensor in accordance with a second embodiment of the present invention;
FIG. 8A through FIG. 8E are cross-sectional views showing manufacturing processes of the angular velocity sensor in accordance with a third embodiment of the present invention;
FIG. 9A through FIG. 9D are cross-sectional views showing the manufacturing processes of the angular velocity sensor in accordance with the third embodiment of the present invention;
FIG. 10A through FIG. 10D are cross-sectional views showing the manufacturing processes of the angular velocity sensor in accordance with the third embodiment of the present invention;
FIG. 11A is a top view of an angular velocity sensor in accordance with a fourth embodiment of the present invention;
FIG. 11B is a cross-sectional view of recesses;
FIG. 12 shows a circuit composed of respective electrodes and terminals in accordance with the fourth embodiment of the present invention;
FIG. 13A and FIG. 13B are schematic cross-sectional views of an angular velocity sensor in accordance with a fifth embodiment of the present invention; and
FIG. 14A and FIG. 14B are schematic cross-sectional views of an angular velocity sensor in accordance with a sixth embodiment of the present invention.

DESCRIPTION OF THE PREFERRED EMBODIMENTS

A description will now be given, with reference to the accompanying drawings, of embodiments of the present invention.

(First Embodiment)

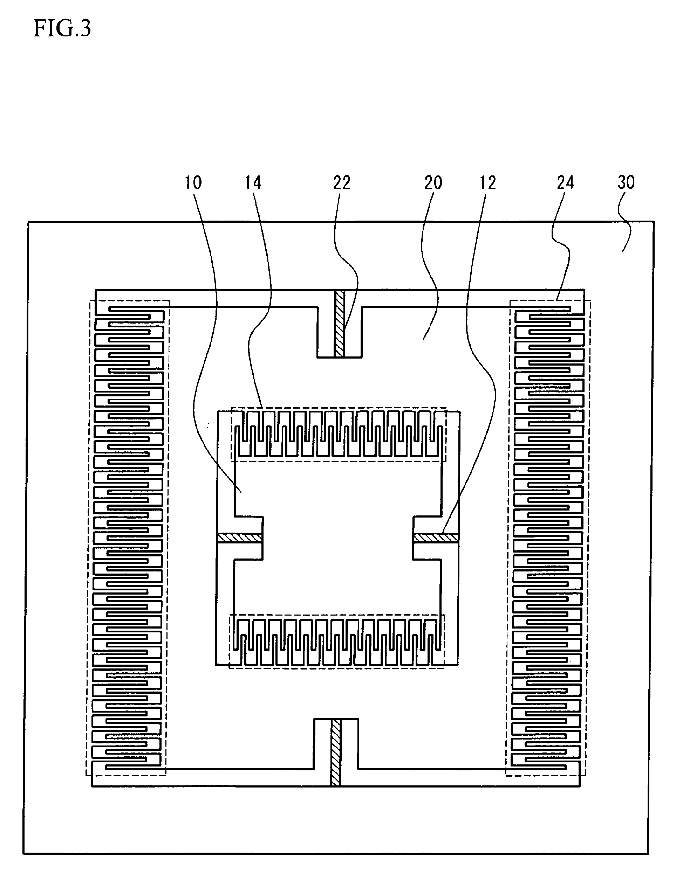

FIG. 3 is a top view of an angular velocity sensor in accordance with a first embodiment of the present invention. Referring to FIG. 3, a first gimbal portion 10 having substantially an H-shape is mechanically connected at a pair of recess parts of opposing sides thereof to a second gimbal portion 20 by first torsion bars 12. That is to say, the second gimbal portion 20 is mechanically connected to the first gimbal portion 10 by the first torsion bars 12 provided on the opposing sides of the first gimbal portion 10. The second gimbal portion 20 is arranged to surround the first gimbal portion 10. Comb-teeth electrodes 14 are also provided on the other pair of opposing sides. Each one electrode of the comb-teeth electrodes 14 is fixed at the first gimbal portion 10, and the other electrode is fixed at the second gimbal portion 20. The comb-teeth electrodes 14 (first electrostatic coupling portion) electrostatically couples the first gimbal portion 10 and the second gimbal portion 20, and are provided at the opposing sides of the first gimbal portion 10.
The second gimbal portion 20 having an H-shape is mechanically connected at a pair of recess parts of opposing sides thereof to a frame portion 30 by second torsion bars 22. That is to say, the frame portion 30 is mechanically connected to the second gimbal portion 20 by the second torsion bars 22 provided on the opposing sides of the second gimbal portion 20. The frame portion 30 is arranged to surround the second gimbal portion 20. Comb-teeth electrodes 24 are also provided on the other pair of opposing sides. One electrode of the comb-teeth electrodes 24 is respectively fixed at the second gimbal portion 20, and the other electrode is fixed at the frame portion 30. The comb-teeth electrodes 24 (second electrostatic coupling portion) electrostatically couples the second gimbal portion 20 and the frame portion 30, and are provided at the opposing sides of the second gimbal portion 20. A pair of the first torsion bars 12 are provided in a direction substantially perpendicular to that of a pair of the second torsion bars 22.

(Second Embodiment)

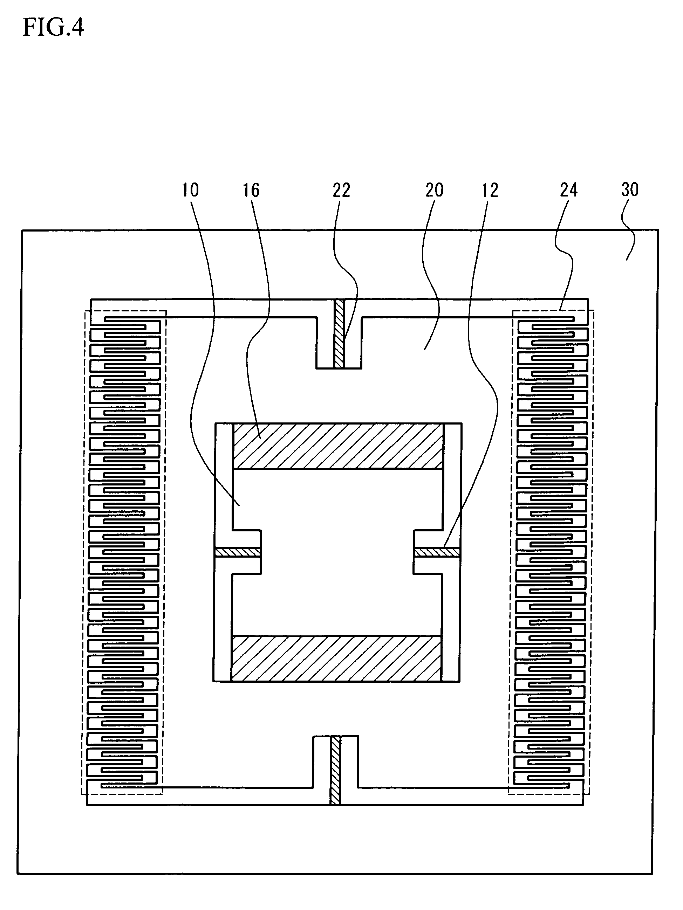

FIG. 4 is a top view of the angular velocity sensor in accordance with a second embodiment of the present invention. In the second embodiment, the comb-teeth electrodes 14 employed in the first embodiment are replaced by parallel plane plate electrodes 16. The other configurations are same as those described in the first embodiment, and a detailed explanation is omitted.

(Third Embodiment)

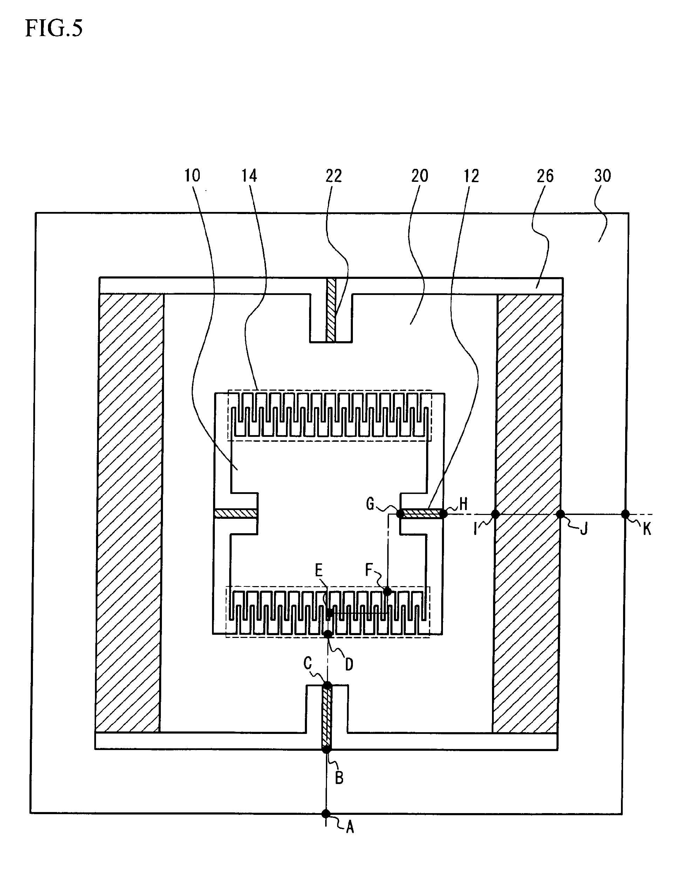

FIG. 5 is a top view of the angular velocity sensor in accordance with a third embodiment of the present invention. In the third embodiment, the comb-teeth electrodes 24 employed in the first embodiment are replaced by the parallel plane plate electrodes 26. The other configurations are same as those described in the first embodiment, and a detailed explanation is omitted.

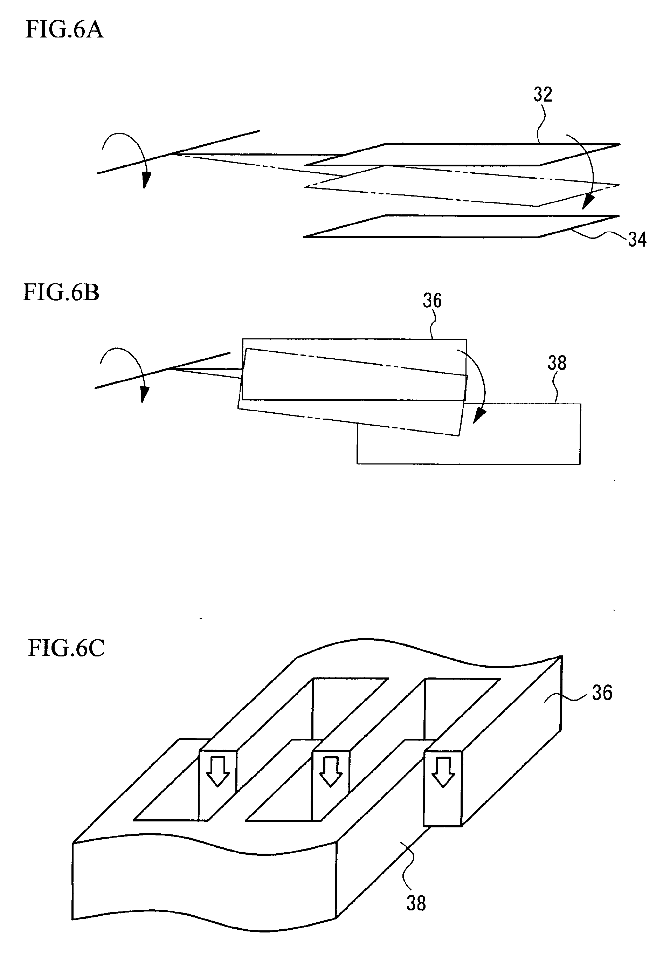

Referring to FIG. 6A through FIG. 7, a description will be given of the principle of swinging the gimbal portion and the principle of detection of the swing of the gimbal portion, with the use of the parallel plane plate electrodes and the comb-teeth electrodes. FIG. 6A schematically shows parallel plane plate electrodes 32 and 34. The electrode 34 is fixed, namely, a fixed electrode, and the electrode 32 swings, namely, a movable electrode. When positive and negative voltages are respectively applied between the electrode 32 and the electrode 34, the electrode 32 and the electrode 34 get closer as indicated by a double-dashed line. When the voltage of the same polarity is applied between the electrode 32 and the electrode 34, the electrode 32 and the electrode 34 gets apart from each other.

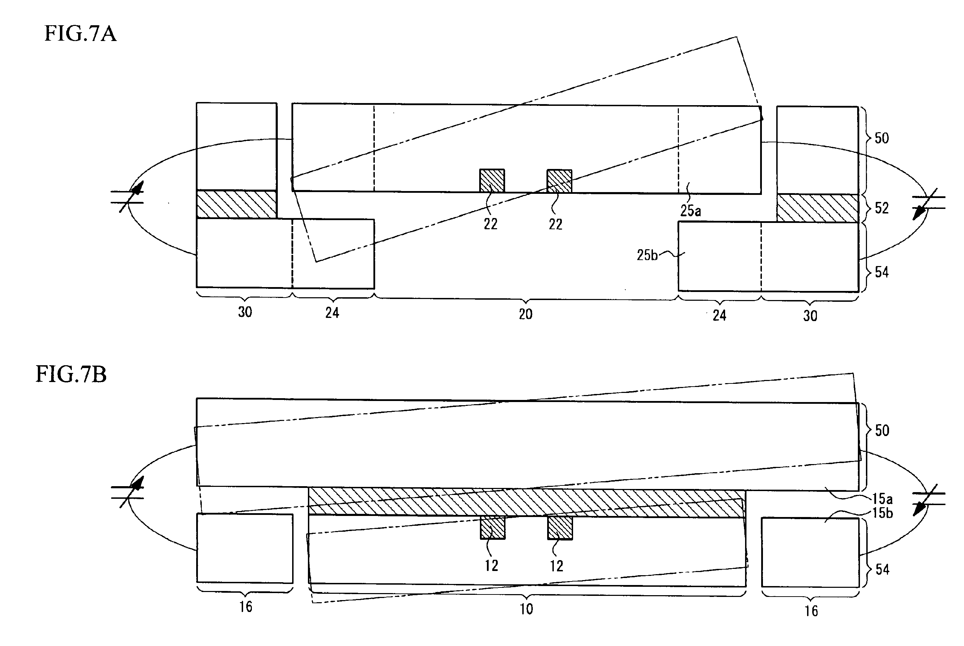

FIG. 7B is a schematic cross-sectional view of a case, for example, where the first gimbal portion 10 serves as a drive gimbal portion, with the use of the parallel plane plate electrodes 16 used in the second embodiment. In fact, the first gimbal portion 10 is smaller than the second gimbal portion 20. However, in FIG. 7A and FIG. 7B, sizes of a lateral direction thereof are changed to show that they have almost similar sizes. An upper electrode 15a of the parallel plane plate electrodes 16 is composed of an upper semiconductor layer 50, as will be described later, and a lower electrode 15b is composed of a base semiconductor layer 54.

In the third embodiment, the upper electrode 15a and the lower electrode 15b may be made of a conductor instead of a semiconductor material, and may be provided with a dielectric material.

The first gimbal portion 10 includes the upper semiconductor layer 50, an insulation layer 52, and the base semiconductor layer 54. The upper electrode 15a is fixed at the first gimbal portion 10, and the lower electrode 15b is fixed at the second gimbal portion 20. The first gimbal portion 10 and the second gimbal portion 20 are connected and held by the torsion bars 12. For example, the first gimbal portion 10 can be made swing as indicated by double-dashed lines in FIG. 7B, by applying a voltage alternately to the parallel plane plate electrodes 16 provided at both sides of the first gimbal portion 10. Even if the polarity of the voltage to be applied is not changed, the first gimbal portion 10 can be made swing by changing the voltage alternately.

Subsequently, when the electrode 32 shown in FIG. 6A swings, the electrode 32 and the electrode 34 get closer and get apart. This changes the electrostatic capacitance between the electrode 32 and the electrode 34. It is possible to learn the magnitude of the swing by detecting the electrostatic capacitance. For example, a description is given of a case where the swing of the first gimbal portion 10 is detected with the use of the parallel plane plate electrodes 16 shown in FIG. 7B. When the first gimbal portion 10 swings, the distance between the upper electrode 15a and the lower electrode 15b in the parallel plane plate electrodes 16 is changed alternately in the pair of electrodes in a left hand position and those in a right hand position in FIG. 7B. Accordingly, the electrostatic capacitance of the parallel plane plate electrodes 16 is alternately changed. It is possible to detect the swing (displacement angle $\theta$x) of the first gimbal portion 10, by differentially detect the electrostatic capacitance.

FIG. 6B is a schematic view of the comb-teeth electrodes 36 and 38 viewed from sides thereof. FIG. 6C schematically shows a perspective view. The electrode 38 is a fixed electrode, and the electrode 36 is a movable electrode. When positive and negative voltages are respectively applied between the electrode 36 and the electrode 38, the electrode 36 and the electrode 38 get closer as indicated by a double-dashed line in FIG. 6B and arrows in FIG. 6C. When the voltage having the same polarity is applied between the electrode 36 and the electrode 38, the electrode 36 and the electrode 38 get apart. FIG. 7A is a schematic cross-sectional view illustrating a case where, for example, the second gimbal portion 20 is made swing with the use of the comb-teeth electrodes 24 employed in the first or second embodiment. The comb-teeth electrodes 24 are composed of an electrode 25a fixed at the second gimbal portion 20 and an electrode 25b fixed at the frame portion 30. The electrode 25a is composed of the upper semiconductor layer 50, and the electrode 25b is composed of the base semiconductor layer 54. The second gimbal portion 20 includes the upper semiconductor layer 50, the insulation layer 52, and the base semiconductor layer 54. However, only the upper semiconductor layer 50 is shown, here. The second gimbal portion 20 and the frame portion 30 are connected and held by the second torsion bars 22. For example, the second gimbal portion 20 can be made swing as indicated by a double-dashed lines in FIG. 7A, by applying a voltage alternately to the comb-teeth electrodes 24 provided at both sides of the second gimbal portion 20. Even if the polarity of the voltage to be applied is not changed, the second gimbal portion 20 can be made swing by changing the voltage alternately.

Subsequently, when the electrode 36 shown in FIG. 6B and FIG. 6C swings, the electrode 36 and the electrode 38 get closer and get apart. This changes the electrostatic capacitance between the electrode 36 and the electrode 38. It is possible to learn the magnitude of the swing by detecting the electrostatic capacitance. For example, a description is given of a case where the swing of the second gimbal portion 20 is detected with the use of the comb-teeth electrodes 24 employed in the first or second embodiment shown in FIG. 7A. When the second gimbal portion 20 swings, the electrode 25a and the electrode 25b in the comb-teeth electrode 24 get overlapped and get apart from each other, alternately in the pair of electrodes in a left hand position and those in a right hand position in FIG. 7A. Accordingly, the electrostatic capacitance of the comb-teeth electrodes 24 is alternately changed. It is possible to detect the swing (displacement angle θx) of the second gimbal portion 20, by differentially detect the electrostatic capacitance.

As described heretofore, it is possible to detect the swings of the first gimbal portion 10 and the second gimbal portion 20, with the use of the parallel plane plate electrodes 16 or the comb-teeth electrodes 24.

The angular velocity sensors employed in the first and third embodiments has the first gimbal portion 10 of an H-shape. In the first gimbal portion 10, the maximum width of the sides of a direction that the pair of the first torsion bars 12 run is greater than those of the sides where the pair the first torsion bars 12 are provided. In the second gimbal portion 20, the maximum width of the sides of a direction that the pair of the second torsion bars 22 run is greater than those of the sides where the pair of the second torsion bars 22 are provided. This can improve the detection sensitivity of the angular velocity.

The principle thereof will now be described. Referring to FIG. 2, again, the detection displacement angle θx is described by an expression 1 below, where Ix, Iy, and Iz denote inertia moments of the detection gimbal portion swung by Coriolis force, and Q denotes the degree of sharpness of the resonance peak of the detection gimbal portion. ω denotes a resonance frequency of the detection gimbal portion. Ωz is an angular velocity. If the angular velocity Ωz is constant, it is desirable that the inertia moment Iy should be increased or the resonance frequency should be decreased. In accordance with the first through third embodiments, the gimbal portion is configured to have an H-shape, thereby increasing the mass as the gimbal portion is layered in width. Accordingly, it is possible to increase the inertia moment Iy, and decrease the resonance frequency. It is therefore possible to increase the detection displacement angle θx and improve the detection sensitivity of the angular velocity.

(Expression 1)

$$\theta x = \frac{(Ix+Iy-Iz) \cdot \theta y \cdot Q}{Ix \cdot \omega} \cdot \Omega z$$

Assuming that the second gimbal portion 20 is set as the drive gimbal portion, and the first gimbal portion 10 is set as the detection gimbal portion, preferably, the first gimbal portion 10 has an H-shape. Meanwhile, assuming that the first gimbal portion 10 is set as the drive gimbal portion, and the second gimbal portion 20 is set as the detection gimbal portion, preferably, the second gimbal portion 20 has an H-shape. In addition, in view of the detection sensitivity of the angular velocity, preferably, the second gimbal portion 20 is set as the drive gimbal portion, and the first gimbal portion 10 is set as the detection gimbal portion. In this manner, the gimbal portion of an H-shape may be either of the first gimbal portion 10 or the second gimbal portion 20.

As described in the first through third embodiments, the electrostatic coupling portion may be either of the parallel plane plate electrodes or the comb-teeth electrodes. Coriolis force Fc and the angular velocity Ωz satisfies, Fc = -2 mVΩz, where m is the mass of material point, V is a swing velocity of the drive gimbal portion that swings. This exhibits that a greater Coriolis force is generated with respect to a constant angular velocity as the swing velocity of the drive gimbal portion becomes faster, if the mass is same. Accordingly, the detection sensitivity is increased. It is desirable that a swinging angle be configured great in order to increase the swing velocity of the drive gimbal portion. However, in the parallel plane plate electrodes, a swinging width is limited to one third of the distance between the parallel plane plate electrodes. Once the swinging width is greater than one-third of the distance between the parallel plane plate electrodes, the movable electrode sticks to the fixed electrode. In order to avoid this, preferably, comb-teeth electrodes may be employed for either the first electrostatic coupling portion or the second electrostatic coupling portion that drives the drive gimbal portion. This can further improve the detection sensitivity of the angular velocity.

As described heretofore, in the second embodiment, preferably, the first gimbal portion 10 serves as the detection gimbal portion and the second gimbal portion 20 serves as the drive gimbal portion. In the third embodiment, preferably, the first gimbal portion 10 serves as the drive gimbal portion and the second gimbal portion 20 serves as the detection gimbal portion. That is to say, preferably, one of the first electrostatic coupling portion and the second electrostatic coupling portion drives either the first gimbal portion 10 or second gimbal portion 20 correspondingly, and is composed of the comb-teeth electrodes.

In the first through third embodiments, the maximum width of the sides of a direction of the pair of the first torsion bars 12 in the first electrostatic coupling portion 14 or 16 is greater than those of the sides where the pair of the first torsion bars 12 are provided in the first gimbal portion 10. Also, the maximum width of the sides of a direction of the pair of the second torsion bars 22 in the second electrostatic coupling portion 24 or 26 is greater than those of the sides where the pair of the second torsion bars 22 are provided in the second gimbal portion 20. Thus, when the drive gimbal portion is driven, it is possible to drive with a smaller voltage, and when the swing of the detection gimbal portion is detected, it is possible to detect with a greater mass, no matter how the swing amplitude is same. It is therefore possible to reduce the power consumption or to improve the detection sensitivity of the angular velocity. It is also possible to provide a correction electrode, as will be described later.

In the first through third embodiments, one torsion bar is provided respectively in FIG. 4 through FIG. 6C. However, as shown in FIG. 7A and FIG. 7B, multiple torsion bars may be provided. As shown in FIG. 2, two torsion bars may form a V-shape.

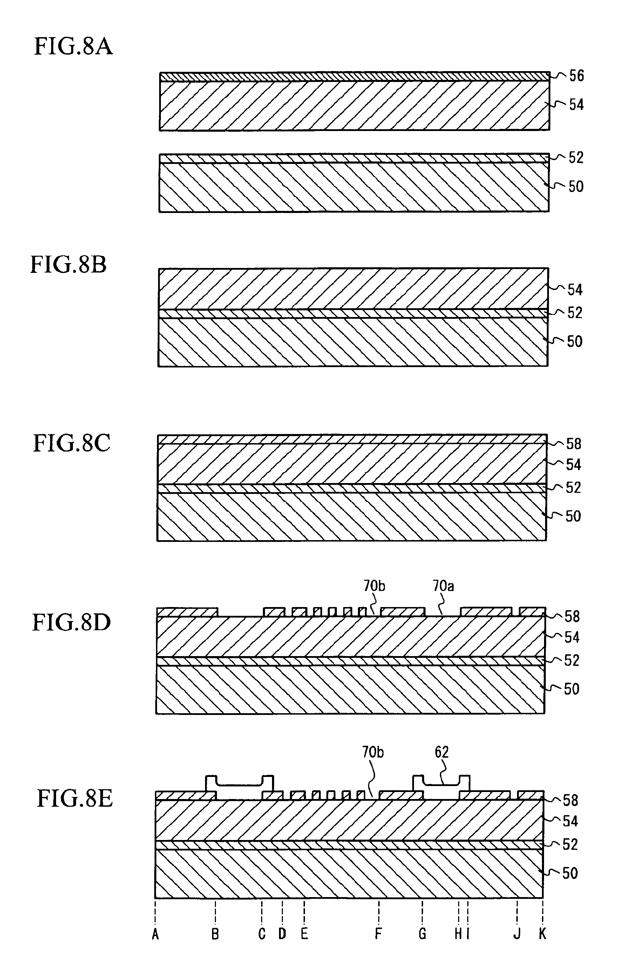

Now, a description is given of manufacturing methods of the angular velocity sensor employed in the third embodiment, taken as an example. The manufacturing methods of those employed in the first and second embodiments are similar. FIG. 8A through FIG. 10D are cross-sectional views of the angular velocity sensor in accordance with the third embodiment, taken along lines A through K in FIG. 5. A-B corresponds to the frame portion 30, B-C corresponds to the second torsion bar 22, C-D corresponds to the second gimbal portion 20, D-E and E-F correspond to the comb-teeth electrodes 14, F-G corresponds to the first gimbal portion 10, G-H corresponds to the first torsion bar 12, H-I corresponds to a portion of the second gimbal portion 20, I-J corresponds to the parallel plane plate electrode 26, and J-K corresponds to the frame portion 30.

Referring to FIG. 8A, silicon oxide films 52 and 56 are formed to have a thickness of 500 nm by thermally oxidizing the surfaces of the silicon substrates 50 and 54, into which arsenic or the like is doped to have a low resistivity of approximately 0.01 $\Omega$cm to 0.1 $\Omega$cm. Referring to FIG. 8B, the silicon oxide films 52 and 56 are sealed together and the thermal treatment is performed at approximately 110 °C. This bonds the silicon oxide films 52 and 56 to form an integrally formed silicon oxide film 52 (hereinafter, referred to as the insulation layer 52). The silicon substrates 50 and 54 are polished, so that each has a thickness of approximately 100 $\mu$m. Thus, an SOI substrate of a structure includes: the silicon substrate 54 (hereinafter, referred to as the base semiconductor layer 54); the insulation film 52; and the silicon substrate 50 (hereinafter, referred to as the upper semiconductor layer 50), with respective thicknesses of 100 $\mu$m / 1 $\mu$m / 100 $\mu$m.

Referring now to FIG. 8C, a silicon oxide film having a thickness of approximately 100 nm to 1000 nm is formed on the base semiconductor layer 54, as an etch mask layer 58. Referring to FIG. 8D, openings 70a and 70b are formed in regions to be etched (the regions that become the torsion bars, the comb-teeth electrodes, and the parallel plane plate electrodes) of the base semiconductor layer 54 with the use of the etch mask layer 58. Referring to FIG. 8E, a photoresist 62 is formed in the opening 70a (the region that will become the torsion bar).

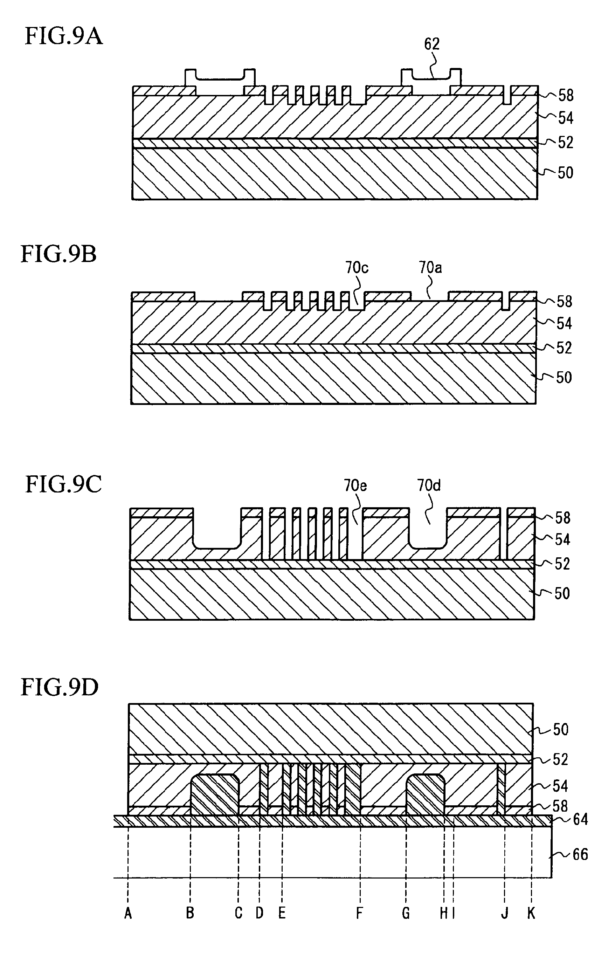

Referring to FIG. 9A, the semiconductor layer 54 is etched by approximately 30 $\mu$m to 40 $\mu$m by using the mask layer 58 and the photoresist 62 as masks. Wet etching is performed with the use of a hydrofluoric acid (HF)-based solution or RIE etching with the use of $SF_6$ and $C_4F_8$. Referring to FIG. 9B, the photoresist 62 is removed. Referring to FIG. 9C, the base semiconductor layer 54 is etched with the mask later 58 as a mask. RIE etching is performed with the use of $SF_6$ and $C_4F_8$. Thus, a recess 70e that reaches the insulation layer 52 is formed in the base semiconductor layer 54. A recess 70d is formed in the region that will become the torsion bar, with leaving the base semiconductor layer 54 by approximately 30 $\mu$m. Referring to FIG. 9D, a photoresist 64 is embedded in the recesses 70d and 70e formed in the base semiconductor layer 54, and is bonded to a substrate for handling.

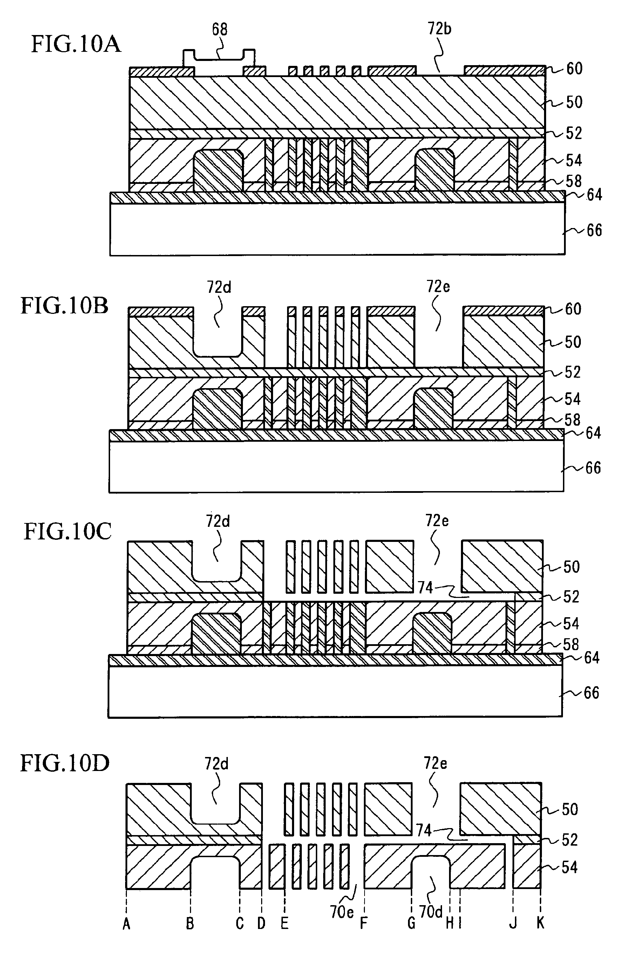

Referring to FIG. 10A, a silicon oxide film is formed on the upper semiconductor layer 50 as a mask layer 60, in a similar manner as shown in FIG. 8C through FIG. 8E. An opening 72b is formed in a given region of the mask layer 60. A photoresist 68 is formed in the region that will become the torsion bar. The upper semiconductor layer 50 is etched by approximately 30 $\mu$m to 40 $\mu$m by using the mask layer 60 and the photoresist 68 as masks, in a similar manner as shown in FIG. 9B and FIG. 9C. The photoresist 68 is removed and the upper semiconductor layer 50 is etched with the use of the mask layer 60 as a mask. Thus, a recess 72e that reaches the insulation layer 52 is formed in the upper semiconductor layer 50. A recess 72d is formed in the region that will become the torsion bar, with leaving the base semiconductor layer 54 by approximately 30 $\mu$m.

Referring to FIG. 10C, a given region of the insulation film 52 and the mask layer 60 are removed by the hydrofluoric acid (HF)-based solution. Referring to FIG. 10D, the substrate 66 for handling is peeled off, and the photoresist 64 and the mask layer 58 are removed. In this manner, the angular velocity sensor employed in the third embodiment is manufactured.

(Fourth Embodiment)

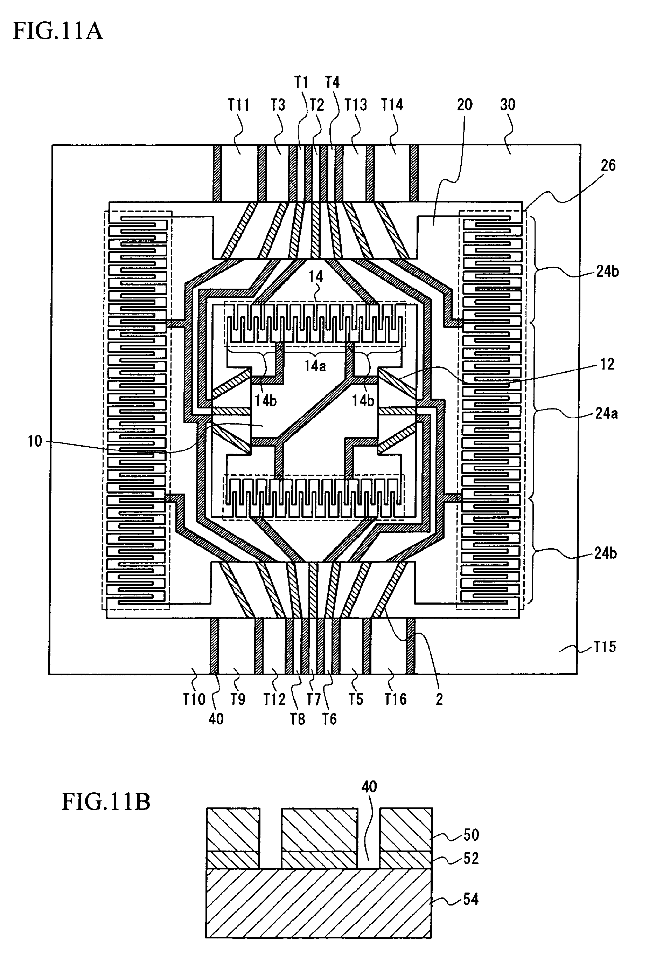

In accordance with a fourth embodiment of the present invention, correction electrodes are provided to the angular velocity sensor employed in the first embodiment. FIG. 11A is a top view of an angular velocity sensor in accordance with the fourth embodiment of the present invention. In FIG. 11A, the first gimbal portion 10, the second gimbal portion 20, and the frame portion 30 have shapes same as those in the first embodiment. As the comb-teeth electrodes 24, correction electrodes 24b are arranged at both sides of a drive electrode 24a. In addition, as the comb-teeth electrodes 14, correction electrodes 14b are arranged at both sides of a detection electrode 14a. Recesses 40 are formed in the upper semiconductor layer 50. FIG. 11B is a cross-sectional view of the recesses 40. The recess 40 isolates the upper semiconductor layers 50 and the insulation layers 52, and the upper semiconductor layers 50 provided at both sides of the recess 40 are electrically isolated. Multiple torsion bars 12 and 22 are provided such that different signals pass through the torsion bars. With the above-described configuration, signals from the respective electrodes are connected to terminals T1 through T16. The first gimbal portion 10 serves as the detection gimbal portion, and the second gimbal portion 20 serves as the drive gimbal portion. That is to say, the comb-teeth electrodes 14 are those for detection, and the comb-teeth electrodes 24 are those for drive.

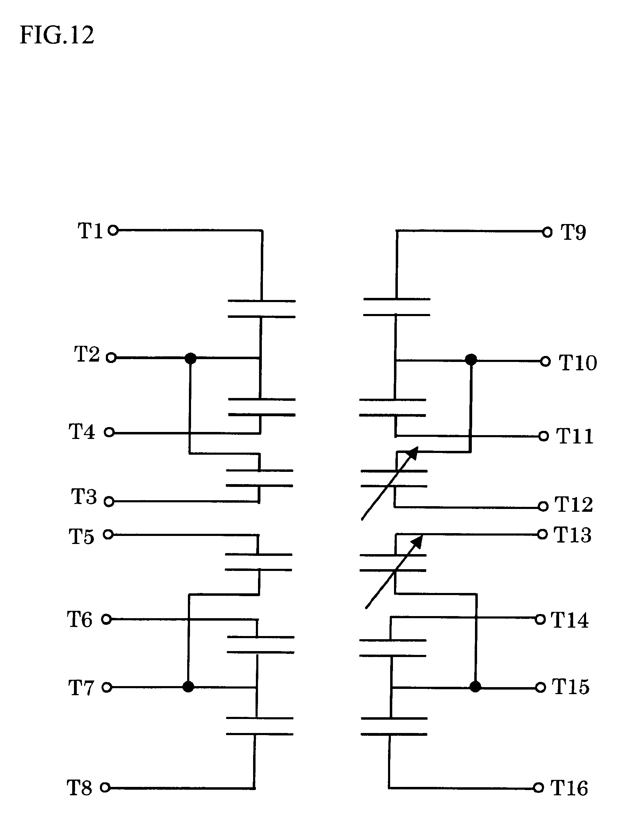

FIG. 12 shows a circuit composed of the electrodes and the terminals in accordance with the fourth embodiment. The terminal T1 is of a correction electrode 1 (14b) in the comb-teeth electrodes 14 at the upper left of FIG. 11A. The terminal T2 is commonly provided to a detection electrode 1 (14a) and correction electrodes 1 and 2 (14b) in the comb-teeth electrodes 14 at the upper side. The terminal T3 is of the detection electrode 1 (14a). The terminal T4 is of a correction electrode 2 (14b) at the upper right. The terminal T5 is of a detection electrode 2 (14a) at the lower side. The terminal T6 is of a correction electrode 3 (14b) at the lower right. The terminal T7 is commonly provided to the detection electrode 2 (14a) and correction electrodes 3 and 4 (14b). The terminal T8 is of a correction terminal 4 (14b) at the lower left.

The terminal T9 is of a correction electrode 5 (24b) in the comb-teeth electrodes 24 at the lower left. The terminal T10 is commonly provided to a drive electrode 1 (24a) and correction electrodes 1 and 2 (24b) in the comb-teeth electrodes 24 at the left side. The terminal T11 is of a correction electrode 6 (24b) at the upper left. The terminal T12 is of the drive electrode 1 (24a) at the left side. The terminal T14 is of a correction electrode 7 at the upper right. The terminal T15 is commonly provided to the drive electrode 2 (24a) and correction electrodes 7 and 8 (24b) in the comb-teeth electrodes 24 at the right side. The terminal T16 is of the correction electrode 8 (24b) at the lower right.

The correction electrodes 14b and 24b are capable of operating as follows. Firstly, when the initial state is checked, it is possible to detect whether or not there is a contact in the comb-teeth electrodes 14 and 24 by measuring the conduction state of the corresponding correction electrodes 14b and 24b. While the comb-teeth electrodes are operating as the drive electrode or the detection electrode, it is possible to monitor whether or not the gimbal portions 10 and 20 swing in a balanced manner by monitoring a change in the electrostatic capacitances of the corresponding correction electrodes 14b and 24b. If the gimbal portions 10 and 20 do not swing in a balanced manner, it is possible to make the gimbal portions 10 and 20 swing in a balanced manner by applying voltages to the correction electrodes 14b and 24b. That is, it is possible to correct unbalanced drive. Also, it is possible to adjust the swing frequency by applying DC voltages to the correction electrodes 14b and 24b. Even in a case where the parallel plane plate electrodes are employed, the correction electrodes 14b and 24b can be provided, thereby bringing about similar effects as the case where the comb-teeth electrodes are employed. The correction electrodes 14b and 24b may serve as either the drive electrode or the detection electrode.

(Fifth Embodiment)

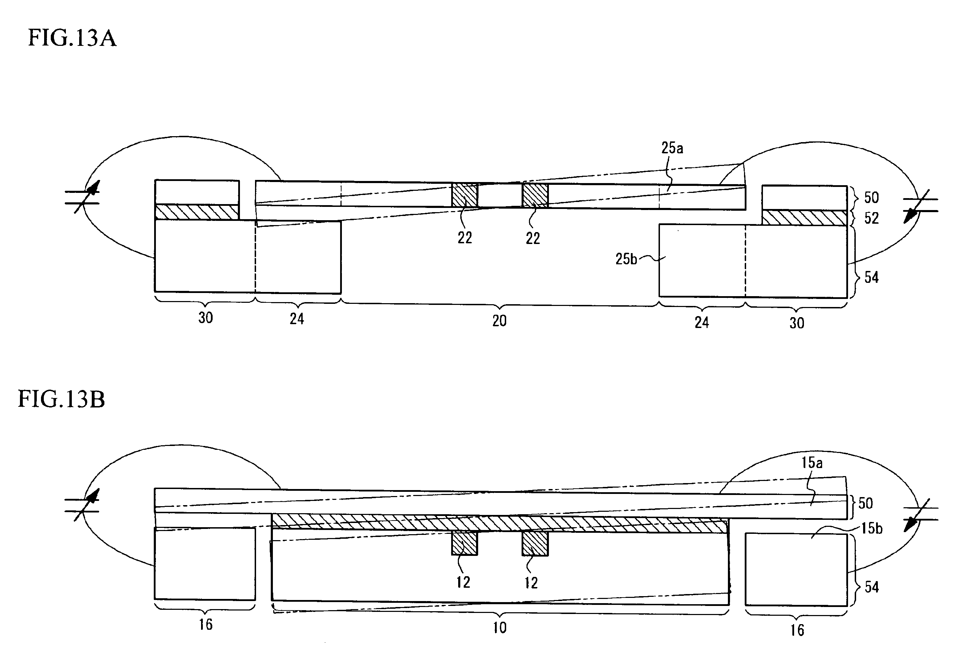

In a fifth embodiment of the present invention, the torsion bars that hold the drive gimbal portion are configured to have a thickness substantially identical to that of the upper semiconductor layer 50. The first electrostatic coupling portion is realized by the parallel plane plate electrodes 16, and the second electrostatic coupling portion is realized by the comb-teeth electrodes 24. The second gimbal portion 20 serves as the drive gimbal portion, and the first gimbal portion 10 serves as the detection gimbal portion. FIG. 13A and FIG. 13B are schematic cross-sectional views of an angular velocity sensor in accordance with the fifth embodiment. FIG. 13A is a cross-sectional view of the second gimbal portion 20 that serves as the drive gimbal portion, the comb-teeth electrodes 24, and the frame portion 30. FIG. 13B is a cross-sectional view of the first gimbal portion 10 and the parallel plane plate electrodes 16. In FIG. 13A and FIG. 13B, except that the upper semiconductor layer has a thickness substantially identical to those of the torsion bars 22, the same components and configurations as those of FIG. 7A and FIG. 7B have the same reference numerals and a detailed explanation will be omitted.

As described, the first gimbal portion 10, the second gimbal portion 20, and the frame portion 30 respectively include the base semiconductor layer 54, the insulation layer 52, and the upper semiconductor layer 50. At least one of the first torsion bars 12 and the second torsion bars 22 may have a thickness substantially identical to that of the upper semiconductor layer 50. For example, suppose that the upper semiconductor layer 50 is 30 $\mu$m in thickness in FIG. 8B, the upper semiconductor layer 50 does not have to be etched in twice as described with FIG. 10B, thereby eliminating the manufacturing process of manufacturing the angular velocity sensor employed in the third embodiment. The etch process does not determine the thickness of the second torsion bars 22, thereby making it possible to uniform the thickness of the second torsion bars 22. It is therefore possible to reduce an error in calculated values of the drive frequency, which is the frequency when the drive gimbal portion (second gimbal portion 20) swings. In the second embodiment, the error is ±10 % in the calculated values of the drive frequency. However, in the fifth embodiment, the error can be reduced to ±2 %.

(Sixth Embodiment)

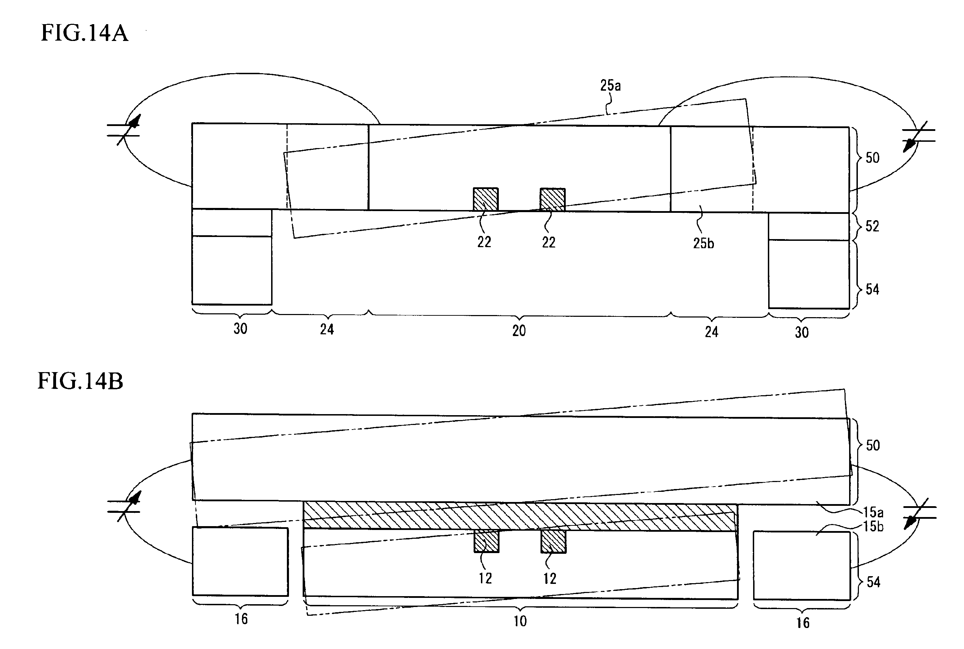

The comb-teeth electrodes are composed of the upper semiconductor layer 50 in accordance with a sixth embodiment. The first electrostatic coupling portion is realized by the parallel plane plate 16, and the second electrostatic coupling portion is realized by the comb-teeth electrodes 24. The second gimbal portion 20 serves as the drive gimbal portion, and the first gimbal portion 10 serves as the detection gimbal portion. FIG. 14A and FIG. 14B are schematic cross-sectional views of an angular velocity sensor in accordance with the sixth embodiment. FIG. 14A is a cross-sectional view of the second gimbal portion 20 that serves as the drive gimbal portion, the comb-teeth electrodes 24, and the frame portion 30. FIG. 14B is a cross-sectional view of the first gimbal portion 10 and the parallel plane plate electrodes 16. In FIG. 14A and FIG. 14B, except that the comb-teeth electrodes 24 are composed of the upper semiconductor layer 50, the same components and configurations as those of FIG. 7A and FIG. 7B have the same reference numerals and a detailed explanation will be omitted. As shown in FIG. 14A, the electrodes opposing each other are both made of the upper semiconductor layer 50.

In accordance with the sixth embodiment of the present invention, the comb-teeth electrodes 14 and 24 are not formed on both sides of the SOI substrate, as the manufacturing method shown in FIG. 9A and FIG. 10B used in the third embodiment. Accordingly, it is unlikely that the pattern of the mask layer 58 shown in FIG. 8D is misaligned with that of the mask layer 60, causing wide variations. Thus, it is possible to further improve the detection sensitivity of the angular velocity sensor.

Finally, various aspects of the present invention are summarized in the following.

There is provided an angular velocity sensor including: a first gimbal portion; a second gimbal portion in connection with the first gimbal portion by first torsion bars provided at opposing sides of the first gimbal portion; a frame portion in connection with the second gimbal portion by second torsion bars provided at the opposing sides of the second gimbal portion; first electrostatic coupling portions provided at the opposing sides of the first gimbal portion to electrostatically couple the first gimbal portion and the second gimbal portion; and second electrostatic coupling portions provided at the opposing sides of the second gimbal portion to electrostatically couple the second gimbal portion and the frame portion, wherein in the first gimbal portion, a maximum width of sides of a direction of the first torsion bars is greater than that of the sides where the first torsion bars are provided.

There is also provided an angular velocity sensor including: a first gimbal portion; a second gimbal portion in connection with the first gimbal portion by first torsion bars provided at opposing sides of the first gimbal portion; a frame portion in connection with the second gimbal portion by second torsion bars provided at the opposing sides of the second gimbal portion; first electrostatic coupling portions provided at the opposing sides of the first gimbal portion to electrostatically couple the first gimbal portion and the second gimbal portion; and second electrostatic coupling portions provided at the opposing sides of the second gimbal portion to electrostatically couple the second gimbal portion and the frame portion, wherein in the second gimbal portion, a maximum width of sides of a direction of the second torsion bars is greater than that of the sides where the second torsion bars are provided.

In the above-described angular velocity sensor, in the first electrostatic coupling portion, a width of the sides of the direction of the first torsion bars may be greater than that of the sides where the first torsion bars are provided. It is possible to reduce the power consumption and improve the detection sensitivity of the angular velocity.

In the above-described angular velocity sensor, in the second electrostatic coupling portion, a width of the sides of the direction of the second torsion bars may be greater than that of the sides where the second torsion bars are provided. It is possible to reduce the power consumption and improve the detection sensitivity of the angular velocity.

In the above-described angular velocity sensor, one of the first electrostatic coupling portion and the second electrostatic coupling portion that respectively drive the first gimbal portion and the second gimbal portion may be composed of comb-teeth electrodes. It is possible to further improve the detection sensitivity of the angular velocity.

In the above-described angular velocity sensor, at least one of the first electrostatic coupling portion and the second electrostatic coupling portion may include correction electrodes; and the correction electrodes may perform at least one of monitoring a change in electrostatic capacitance of the first gimbal portion or the second gimbal portion respectively and correcting an unbalanced drive of the first gimbal portion or the second gimbal portion respectively. It is possible to monitor whether or not the gimbal portion swings in a balanced manner, and it is possible to correct an unbalance of the swing of the gimbal portion.

In the above-described angular velocity sensor, the first gimbal portion, the second gimbal portion, and the frame portion may include a base semiconductor layer, an insulation layer, and an upper semiconductor layer; and one of the first torsion bars and the second torsion bars may have a thickness substantially identical to that of the upper semiconductor layer. It is possible to decrease the error of the calculation value of the drive frequency of the gimbal portion.

The present invention is not limited to the above-mentioned embodiments, and other embodiments, variations and modifications may be made without departing from the scope of the present invention.

The present invention is based on Japanese Patent Application No. 2005-219253 filed on July 28, 2005, the entire disclosure of which is hereby incorporated by reference.

**Claims**

1.  An angular velocity sensor comprising:

    a first gimbal portion;
    a second gimbal portion connected to the first gimbal portion by first torsion bars provided at opposing sides of the first gimbal portion;
    a frame portion connected to the second gimbal portion by second torsion bars provided at the opposing sides of the second gimbal portion;
    first electrostatic coupling portions provided at the opposing sides of the first gimbal portion to electrostatically couple the first gimbal portion and the second gimbal portion; and
    second electrostatic coupling portions provided at the opposing sides of the second gimbal portion to electrostatically couple the second gimbal portion and the frame portion,

    wherein in the first gimbal portion, a maximum width of sides of a direction of the first torsion bars is greater than that of the sides where the first torsion bars are provided.

2.  An angular velocity sensor comprising:

    a first gimbal portion;
    a second gimbal portion connected to the first gimbal portion by first torsion bars provided at opposing sides of the first gimbal portion;
    a frame portion connected to the second gimbal portion by second torsion bars provided at the opposing sides of the second gimbal portion;
    a first electrostatic coupling portion provided at the opposing sides of the first gimbal portion to electrostatically couple the first gimbal portion and the second gimbal portion; and
    a second electrostatic coupling portion provided at the opposing sides of the second gimbal portion to electrostatically couple the second gimbal portion and the frame portion,

    wherein in the second gimbal portion, a maximum width of sides of a direction of the second torsion bars is greater than that of the sides where the second torsion bars are provided.

3.  The angular velocity sensor as claimed in claim 1, wherein in the first electrostatic coupling portion, a width of the sides of the direction of the first torsion bars is greater than that of the sides where the first torsion bars are provided.

4.  The angular velocity sensor as claimed in claim 2, wherein in the second electrostatic coupling portion, a width of the sides of the direction of the second torsion bars is greater than that of the sides where the second torsion bars are provided.

5.  The angular velocity sensor as claimed in claim 1, wherein one of the first electrostatic coupling portion and the second electrostatic coupling portion that respectively drive the first gimbal portion and the second gimbal portion is composed of comb-teeth electrodes.

6.  The angular velocity sensor as claimed in claim 1, wherein the first electrostatic coupling portion and the second electrostatic coupling portion are composed of either comb-teeth electrodes or parallel plane plate electrodes.

7.  The angular velocity sensor as claimed in claim 1, wherein:

at least one of the first electrostatic coupling portion and the second electrostatic coupling portion includes correction electrodes; and

the correction electrodes performs at least one of monitoring a change in electrostatic capacitance of the first gimbal portion or the second gimbal portion respectively and correcting an unbalanced drive of the first gimbal portion or the second gimbal portion respectively.

8. The angular velocity sensor as claimed in claim 7, wherein the correction electrodes are either electrodes of a comb-teeth structure or the electrodes of a parallel plane plate structure.

9. The angular velocity sensor as claimed in claim 1, wherein:

the first gimbal portion, the second gimbal portion, and the frame portion include a base semiconductor layer, an insulation layer, and an upper semiconductor layer; and

one of the first torsion bars and the second torsion bars have a thickness substantially identical to that of the upper semiconductor layer.

10. The angular velocity sensor as claimed in claim 5, wherein:

the first gimbal portion, the second gimbal portion, and the frame portion respectively include a base semiconductor layer, an insulation layer, and an upper semiconductor layer; and

the comb-teeth electrodes are composed of the upper semiconductor layer.

11. The angular velocity sensor as claimed in claim 2, wherein one of the first electrostatic coupling portion and the second electrostatic coupling portion that respectively drive the first gimbal portion and the second gimbal portion is composed of comb-teeth electrodes.

12. The angular velocity sensor as claimed in claim 2, wherein the first electrostatic coupling portion and the second electrostatic coupling portion are composed of either comb-teeth electrodes or parallel plane plate electrodes.

13. The angular velocity sensor as claimed in claim 2, wherein:

at least one of the first electrostatic coupling portion and the second electrostatic coupling portion includes correction electrodes; and

the correction electrodes performs at least one of monitoring a change in electrostatic capacitance of the first gimbal portion or the second gimbal portion respectively and correcting an unbalanced drive of the first gimbal portion or the second gimbal portion respectively.

14. The angular velocity sensor as claimed in claim 13, wherein the correction electrodes are either electrodes of a comb-teeth structure or the electrodes of a parallel plane plate structure.

15. The angular velocity sensor as claimed in claim 2, wherein:

the first gimbal portion, the second gimbal portion, and the frame portion include a base semiconductor layer, an insulation layer, and an upper semiconductor layer; and

one of the first torsion bars and the second torsion bars have a thickness substantially identical to that of the upper semiconductor layer.

16. The angular velocity sensor as claimed in claim 1, wherein in the second gimbal portion, the maximum width of the sides of the direction of the second torsion bars is greater than that of the sides where the second torsion bars are provided.

FIG.1

# FIG.2

ROTATION ANGULAR
VELOCITY APPLIED: $\Omega z$

10

20

22

DRIVE DISPLACEMENT
ANGLE: $\theta y$

DETECTION DISPLACEMENT
ANGLE: $\theta x$

12

FIG.3

FIG.4

EP 1 748 280 A2

FIG.5

## FIG.6A

## FIG.6B

## FIG.6C

FIG.7A

50
52
54

30  24  20  24  30

22  22  25a  25b

FIG.7B

50
15a
15b
54

16  10  16

12  12

FIG.8A

~56
~54

~52
~50

FIG.8B

~54
~52
~50

FIG.8C

~58
~54
~52
~50

FIG.8D

70b    70a

~58
~54
~52
~50

FIG.8E

70b    62

~58
~54
~52
~50

A    B    C D E    F    G    H I    J K

FIG.9A

FIG.9B

FIG.9C

FIG.9D

FIG.10A

FIG.10B

FIG.10C

FIG.10D

FIG.11A

FIG.11B

FIG.12

FIG.13A

FIG.13B

FIG.14A

FIG.14B

EP 1 748 280 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7003337 A
- JP 2005219253 A